(19) Europäisches Patentamt / European Patent Office / Office européen des brevets

(11) **EP 4 093 128 A1**

(12) **EUROPEAN PATENT APPLICATION**
published in accordance with Art. 153(4) EPC

(43) Date of publication:
**23.11.2022 Bulletin 2022/47**

(21) Application number: **20914929.3**

(22) Date of filing: **20.01.2020**

(51) International Patent Classification (IPC):
**H04W 72/12** (2009.01)

(52) Cooperative Patent Classification (CPC):
**H04W 72/12**

(86) International application number:
**PCT/CN2020/073314**

(87) International publication number:
**WO 2021/146864 (29.07.2021 Gazette 2021/30)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **HE, Chuanfeng**
  **Dongguan, Guangdong 523860 (CN)**
• **WANG, Shukun**
  **Dongguan, Guangdong 523860 (CN)**
• **XU, Weijie**
  **Dongguan, Guangdong 523860 (CN)**

(74) Representative: **Ipside**
**7-9 Allées Haussmann**
**33300 Bordeaux Cedex (FR)**

(54) **CELL ACCESS METHOD, DEVICE AND STORAGE MEDIUM**

(57) Embodiments of the present application provide a cell access method, a device, and a storage medium. The method includes: a terminal device receives a first synchronization signal block SSB; the terminal device determines, according to a preset bandwidth and bandwidth information contained in the first SSB, a target cell that supports the access by the terminal device, and the terminal device accesses the target cell. In the solution of the embodiments of the present application, if the cell corresponding to the first SSB is not the target cell that supports the access by the terminal device, the terminal device does not need to blindly detect the PDCCH of the cell, which saves the time for accessing the network. Further, whether the cell corresponding to the first SSB is the target cell is determined only according to the bandwidth information contained in the first SSB and the preset bandwidth, without adding additional signaling overhead, which has little impact on the existing NR system, and the complexity is low.

FIG. 3

A terminal device receives a first synchronization signal block SSB — 101

The terminal device determines, according to a preset bandwidth and bandwidth information contained in the first SSB, a target cell that supports the access by the terminal device — 102

The terminal device accesses the target cell — 103

**Description**

**TECHNICAL FIELD**

Embodiments of the present application relate to the communication technology, in particular, to a cell access method, a device, and a storage medium.

**BACKGROUND**

The 5G new radio (New Radio, NR) system is mainly designed to support the (Enhanced Mobile Broadband, eMBB) service. It is mainly to meet the need of high speed, high spectral efficiency, and large bandwidth. In the practical application, in addition to the eMBB, there are many different service types, such as a sensor network, video surveillance, a wearable, etc., which have different requirements from the eMBB service in terms of speed, bandwidth, power consumption, and cost. The capability of the terminal supporting these services is reduced compared to the terminal supporting the eMBB, for example, the supported bandwidth is reduced, the processing time is relaxed, and the number of antennas is reduced.

The current cell access scheme of the NR system is as follows: the terminal obtains the PDCCH search space and the CORESET through the received SSB, and blindly detects the PDCCH according to the PDCCH search space and the CORESET. In the above scheme, if the bandwidth of the PDCCH is relatively large and the bandwidth supported by the low-capability terminal is relatively small, the PDCCH may not be detected after a long period of PDDCH detection, resulting in a long time to access the network.

**SUMMARY**

The embodiments of the present application provide a cell access method, a device, and a storage medium, so as to reduce the time for the terminal device to access the network.

In a first aspect, an embodiment of the present application may provide a cell access method, including:

receiving, by a terminal device, a first synchronization signal block SSB;
determining, by the terminal device, according to a preset bandwidth and bandwidth information contained in the first SSB, a target cell that supports access by the terminal device; and
accessing, by the terminal device, the target cell.

In a second aspect, an embodiment of the present application may provide a cell access method, including:
sending, by a network device, a first synchronization signal block SSB, where the first SSB includes bandwidth information, and the bandwidth information and a preset bandwidth are used to indicate a target cell that supports access.

In a third aspect, an embodiment of the present application may provide a terminal device, including:

a receiving module, configured to receive a first synchronization signal block SSB;
a determining module, configured to determine, according to a preset bandwidth and bandwidth information contained in the first SSB, a target cell that supports access by the terminal device.

In a fourth aspect, an embodiment of the present application may provide a network device, including:
a sending module, configured to send a first synchronization signal block SSB, where the first SSB includes bandwidth information, and the bandwidth information and a preset bandwidth are used to indicate a target cell that supports access.

In a fifth aspect, an embodiment of the present application may further provide a terminal device, including:

a processor, a memory, an interface for communicating with a network device;
the memory stores computer-executable instructions;
the processor executes the computer-executable instructions stored in the memory, enabling the processor to execute the cell access method provided in any one of the first aspect.

In a sixth aspect, an embodiment of the present application may further provide a network device, including:

a processor, a memory, an interface for communicating with a terminal device;
the memory stores computer-executable instructions;
the processor executes the computer-executable instructions stored in the memory, enabling the processor to execute the cell access method provided in any one of the second aspect.

In a seventh aspect, an embodiment of the present application provides a computer-readable storage medium, where computer-executable instructions are stored in the computer-readable storage medium, when the computer-executable instructions are executed by a processor, are used to implement the cell access method described in any one of the first aspect.

In an eighth aspect, an embodiment of the present application provides a computer-readable storage medium, where computer-executable instructions are stored in the computer-readable storage medium, when the computer-executable instructions are executed by a processor, are used to implement the cell access method described in any one of the second aspect.

In a ninth aspect, an embodiment of the present application provides a program. When executed by a processor, the program is used to execute the cell access method described in any one of the first aspect above.

In a tenth aspect, an embodiment of the present application further provides a program. When executed by a processor, the program is used to execute the cell access method described in any one of the second aspect above.

Optionally, the above-mentioned processor may be a chip.

In an eleventh aspect, an embodiment of the present application provides a computer program product, including program instructions, where the program instructions are used to implement the cell access method described in any one of the first aspect.

In a twelfth aspect, an embodiment of the present application provides a computer program product, including program instructions, where the program instructions are used to implement the cell access method described in any one of the second aspect.

In a thirteenth aspect, an embodiment of the present application provides a chip, including: a processing module and a communication interface, where the processing module can execute the cell access method described in any one of the first aspect.

Further, the chip also includes a storage module (e.g., a memory), the storage module is used for storing instructions, the processing module is used for executing the instructions stored in the storage module, and the execution of the instructions stored in the storage module enables the processing module to execute the cell access method described in any one of the first aspect.

In a fourteenth aspect, an embodiment of the present application provides a chip, including: a processing module and a communication interface, where the processing module can execute the cell access method described in any one of the second aspect.

Further, the chip also includes a storage module (e.g., a memory), the storage module is used for storing instructions, the processing module is used for executing the instructions stored in the storage module, and the execution of the instructions stored in the storage module enables the processing module to execute the cell access method described in any one of the second aspect.

In the cell access method, the device, and the storage medium provided by the embodiments of the present application, the terminal device receives the first synchronization signal block SSB; the terminal device determines, according to the preset bandwidth and the bandwidth information contained in the first SSB, the target cell that supports the access by the terminal device, so that the terminal device can determine, according to the preset bandwidth and the bandwidth information contained in the first SSB, whether the cell corresponding to the first SSB is the target cell that supports the access by the terminal device, and if the cell corresponding to the first SSB is not the target cell that supports the access by the terminal device, the terminal device does not need to blindly detect the PDCCH of the cell, which saves the time for accessing the network. Further, whether the cell corresponding to the first SSB is the target cell is determined only according to the preset bandwidth and the bandwidth information contained in the first SSB, without adding additional signaling overhead, which has little impact on the existing NR system, and the complexity is low.

## BRIEF DESCRIPTION OF DRAWINGS

In order to more clearly illustrate the embodiments of the present application or the technical solutions in the prior art, the following will briefly introduce the accompanying drawings that need to be used in the description of the embodiments or the prior art. Obviously, the accompanying drawings in the following description are some embodiments of the present application, and for those of ordinary skill in the art, other drawings can also be obtained from these drawings without any creative effort.

FIG. 1 is a schematic diagram of the SSB structure.
FIG. 2 is a schematic diagram of a communication system to which an embodiment of the present application is applied.
FIG. 3 is a flowchart of an embodiment according to the data transmission method provided by the present application.
FIG. 4 is a schematic diagram of the principle of determining the frequency domain position of the second SSB according to an embodiment of the method provided by the present application.

FIG. 5 is a schematic diagram of the principle of determining the frequency domain position of the second SSB according to another embodiment of the method provided by the present application.

FIG. 6 is a schematic flowchart of another embodiment of the method provided by the present application.

FIG. 7 is a schematic flowchart of yet another embodiment of the method provided by the present application.

FIG. 8 is a schematic flowchart of yet another embodiment of the method provided by the present application.

FIG. 9 is an interactive flowchart of an embodiment of the data transmission method provided by the present application.

FIG. 10 is a schematic structural diagram of a first embodiment of the terminal device provided by the present application.

FIG. 11 is a schematic structural diagram of a first embodiment of the network device provided by the present application.

FIG. 12 is a schematic structural diagram of a second embodiment of the terminal device provided by the present application.

FIG. 13 is a schematic structural diagram of a second embodiment of the network device provided by the present application.

## DESCRIPTION OF EMBODIMENTS

In order to make the purposes, technical solutions and advantages of the embodiments of the present application clearer, the technical solutions in the embodiments of the present application will be described clearly and completely below with reference to the drawings in the embodiments of the present application. Obviously, the described embodiments are a part of the embodiments of the present application, but not all of the embodiments. Based on the embodiments in the present application, all other embodiments obtained by those of ordinary skill in the art without creative efforts shall fall within the protection scope of the present application.

The terms "first", "second" and the like in the description, claims and the above-mentioned drawings of the embodiments of the present application are used to distinguish similar objects, and are not necessarily used to describe a specific sequence or sequence. It is to be understood that the data so used may be interchanged under appropriate circumstances such that the embodiments of the application described herein can, for example, be practiced in sequences other than those illustrated or described herein. Furthermore, the terms "comprising" and "having" and any variations thereof, are intended to cover non-exclusive inclusion, for example, a process, method, system, product or device comprising a series of steps or units is not necessarily limited to those expressly listed. Rather, those steps or units may include other steps or units not expressly listed or inherent to the process, method, product or device.

At present, with people's pursuit of speed, delay, high-speed mobility and energy efficiency, as well as the diversity and complexity of services in future life, the 3GPP international standards organization has begun to develop the 5G. The 5G is mainly designed to support the (Enhanced Mobile Broadband, eMBB) service. It is mainly to meet the need of high speed, high spectral efficiency, and large bandwidth.

Some concepts involved in this application are introduced below:

1. Synchronization signal block (SS/PBCH block, SSB):

The common channel and signal in the NR system, such as the synchronization signal (synchronization signal, SS) and the broadcast channel, need to cover the entire cell by means of multi-beam scanning, which facilitate the terminal device in the cell to receive them. The multi-beam transmission of the synchronization signal SS is realized by defining a SS/PBCH burst set (burst set). An SS burst set contains one or more SS/PBCH block (hereinafter referred to as SSB). One SSB is used to carry the synchronization signal and broadcast channel of one beam. Therefore, an SS burst set can contain synchronization signals of the beams with the number of the SSB number number in a cell. The maximum number L of the SSB number is related to the frequency band of the system:

for frequency range up to 3 GHz, L is 4;
for frequency range from 3 GHz to 6 GHz, L is 8;
for from 6 GHz to 52.6 GHz, L is 64.

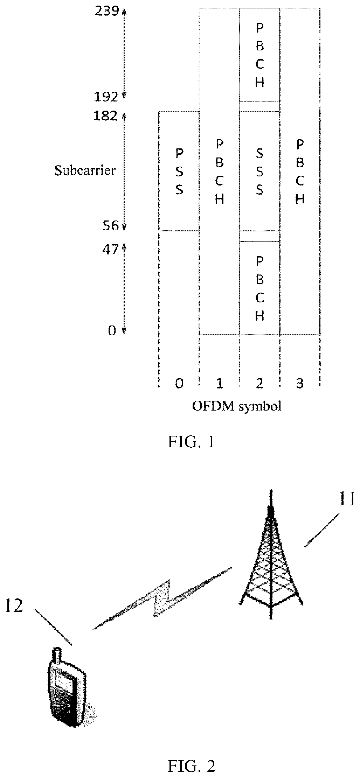

As shown in FIG. 1, one SSB contains a PSS of one symbol, an SSS of one symbol and an NR physical broadcast channel (PBCH) of two symbols. The time-frequency resources occupied by the PBCH include a demodulation reference signal (Demodulation Reference Signal, DMRS), which is used for demodulation of the PBCH.

2. Synchronization raster raster

For the wireless spectrum in NR, the frequency domain position of the synchronization signal block is defined by the synchronization raster. As shown in Table 1 below, in different frequency ranges, the possible frequency domain position of the synchronization signal block is determined by the formula in Table 1, and numbered by SSREF.

Table 1 SS raster for different frequency range

| Frequency range | SS Block frequency position $SS_{REF}$ |
|---|---|
| 0 - 3000 MHz | $N \times 1200kHz + M \times 50kHz$, N=1:2499, $M \in \{1,3,5\}$ (Note 1) |
| 3000 - 24250 MHz | 3000 MHz + $N \times 1.44$ MHz<br>N = 0:14756 |
| NOTE: The default value for operating bands with SCS spaced channel raster is M=3. | |

After the synchronization raster is determined, the resource mapping of the synchronization signal block is determined according to Table 2 below. That is, the synchronization raster is located in the resource unit RE with the number 0 of the PRB with the PRB number of 10 in the 20 physical resource blocks (Physical Resource Block, PRB) of the synchronization signal block.

Table 2 Synchronization Raster to SS block Resource Element
Mapping

| RE index $k$ | 0 |
|---|---|
| PRB number $n_{PRB}$ of the SSB | $n_{PRB}$ = 10 |

For the synchronization raster, in different frequency bands, the distribution of the synchronization raster in the band is determined by Table 3 below. For example, for the band d n77, the range of the synchronization raster number is 7711-8329, for a total of 619 synchronization raster. This number is called the global synchronization channel number (Global Synchronization Channel Number, GSCN). The terminal device searches for the SS/PBCH block according to the position of the synchronization raster in a specific frequency band, so as to synchronize and receive a master information block (MIB) and system information block (SIB) information.

Table 3 Applicable SS raster entries per operating band

| NR Operating Band | SS Block SCS | Range of GSCN ( first - < step > - last) |
|---|---|---|
| n1 | 15kHz | 5279 - <1> - 5419 |
| n2 | 15kHz | 4829 - <1> - 4969 |
| n3 | 15kHz | 4517 - <1> - 4693 |
| n5 | 15kHz | 2177 - <1> - 2230 |
| n5 | 30kHz | 2183 - <1> - 2224 |
| n7 | 15kHz | 6554 - <1> - 6718 |
| n8 | 15kHz | 2318 - <1> - 2395 |
| n12 | 15kHz | 1828-<1>-1858 |
| n20 | 15kHz | 1982 - < 1 > - 2047 |
| n25 | 15kHz | 4829 - <1> - 4981 |
| n28 | 15kHz | 1901 - <1> - 2002 |
| n34 | 15kHz | 5030 - <1> - 5056 |
| n38 | 15kHz | 6431 - <1> - 6544 |
| n39 | 15kHz | 4706 - <1> - 4795 |
| n40 | 15kHz | 5756 - <1> - 5995 |

(continued)

| NR Operating Band | SS Block SCS | Range of GSCN ( first - < step > - last) |
|---|---|---|
| n41 | 15kHz | 6246 - <3> - 6714 |
| | 30kHz | 6252 - <3> - 6714 |
| n51 | 15kHz | 3572 - <1> - 3574 |
| n66 | 15kHz | 5279 - <1> - 5494 |
| | 30kHz | 5285 - <1> - 5488 |
| n70 | 15kHz | 4993 - <1> - 5044 |
| n71 | 15kHz | 1547 - <1> - 1624 |
| n75 | 15kHz | 3584 - <1> - 3787 |
| n76 | 15kHz | 3572 - <1> - 3574 |
| n77 | 30kHz | 7711 - <1> - 8329 |
| n78 | 30kHz | 7711 - <1> - 8051 |
| n79 | 30kHz | 8480 - < 16> - 8880 |

In practical applications, in addition to the eMBB, there are many different service types, such as a sensor network, video surveillance, a wearable, etc., which have different requirements from the eMBB service in terms of speed, bandwidth, power consumption, and cost. The capability of the terminal supporting these services is reduced compared to the terminal supporting the eMBB, for example, the supported bandwidth is reduced, the processing time is relaxed, and the number of antennas is reduced. The NR system needs to be optimized for the above-mentioned services and the corresponding low-capacity terminal. The optimized system is called the NR-light system.

The frequency point of the 5G is divided into two parts: FR1 (f < 6 GHz, low frequency) and FR2 (f > 6 GHz, high frequency, millimeter wave). The bandwidth of FR1 can be 5 MHz, 10 MHz, 15 MHz, 20 MHz, 25 MHz, 30 MHz, 40 MHz, 50 MHz, 60 MHz, 80 MHz and 100 MHz. The bandwidth of FR2 can be 50 MHz, 100 MHz, 200 MHz and 400 MHz, etc. In order to support the access by the terminal device to the network on the 5G frequency band, for FR1, the bandwidth of the terminal device needs to support 100 MHz. Correspondingly, for the FR2 frequency band, the bandwidth of the terminal device needs to support 400 MHz. But for the terminal device of the NR-light system, one of the main features is the reduction of the supported bandwidth, thereby reducing power consumption and cost.

The current cell access scheme of the NR system is as follows: the terminal obtains the physical downlink control channel (Physical Downlink Control Channel, PDCCH) search space (search space) through the received SSB, that is, the type0 PDCCH search space and the control resource set (Control Resource Set, CORESET), blindly detects the PDCCH according to type0 PDCCH search space and CORESET. In above scheme, if the bandwidth of the PDCCH is relatively large and the bandwidth supported by the low-capability terminal of the NR-light system is relatively small, the PDCCH may not be detected after a long period of PDDCH detection, resulting in a long time to access the network.

The technical idea of the method in the embodiment of the present application is as follows: under the premise of being compatible with the cell access process of the current NR system, a cell access method is proposed for the NR-light terminal device, so as to reduce the time for the NR-light terminal device to access the network. The specific solution is as follows: before blindly detecting the PDCCH, the NR-light terminal device determines whether the cell supports the access by the terminal device, for example, according to the bandwidth information sent by the network device, determines whether the cell supports the access by the terminal device. If it is determined that the cell does not support the access by the terminal device, there is no need to blindly detect the PDCCH, but continue to search for another cell to access, which can reduce the time for the terminal device to access the cell, and at the same time does not change the current cell access process of the terminal device in the NR system, that is, it is compatible with the access process of the current NR system.

The technical solution of the present application will be described in detail below with specific examples. The following specific embodiments may be combined with each other, and the same or similar concepts or processes may not be repeated in some embodiments.

FIG. 2 is a schematic diagram of a communication system to which an embodiment of the present application is applied. As shown in FIG. 2, the communication system includes at least a network device 11 and a terminal device 12. It can be understood that, in an actual communication system, there may be one or more network device 11 and one or more terminal device 12, and FIG. 2 only takes one as an example.

In FIG. 2, the network device 11 may be an access network device, for example, may be an access device in an LTE network and its evolved network, such as an evolved base station (Evolutional Node B, eNB or eNodeB for short), or may also include a next generation node B (next generation node B, gNB) in the 5G NR system, or a relay station, or a base station in a new network system in the future, etc.

The terminal device 12 may also be referred to as a mobile terminal, a user equipment (User Equipment, UE for short), an access terminal, a user unit, a user station, a mobile station, a mobile platform, a user terminal, a terminal, a wireless communication device, a user agent or a user apparatus. Specifically, it can be a smart phone, a cellular phone, a cordless phone, a personal digital assistant (Personal Digital Assistant, PDA for short) device, a handheld device with a wireless communication function or another processing device connected to a wireless modem, a vehicle-mounted device, a wearable device, or the like. In an embodiment of the present application, the terminal device has an interface for communicating with a network device.

In the following embodiments of this application, the NR-light terminal device is used as an example for description, but the following solutions are also applicable to a NR terminal device and a terminal device of another system, which is not limited in this application.

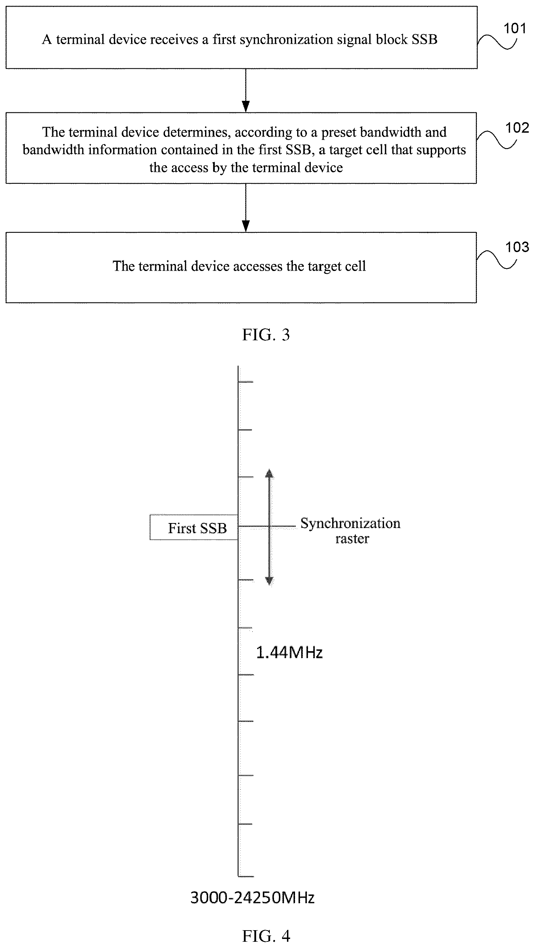

FIG. 3 is a flowchart of an embodiment according to the cell access method provided by the present application. As shown in FIG. 3, the specific implementation steps of this embodiment include:

step 101, a terminal device receives a first synchronization signal block SSB.

In an embodiment, the terminal device receives the first SSB sent by the network device, where the principle of the SSB may refer to the foregoing introduction.

In an embodiment, the network device can implicitly indicate the target cell that supports the access through the bandwidth information contained in the synchronization signal block, for example, whether the NR-light terminal device can access the cell.

Step 102, the terminal device determines, according to a preset bandwidth and bandwidth information contained in the first SSB, a target cell that supports the access by the terminal device.

Step 103, the terminal device accesses the target cell.

In an embodiment, the terminal device determines, according to the preset bandwidth and the bandwidth information contained in the first SSB sent by the network device, the target cell that supports the access by the terminal device.

For example, the PBCH in the synchronization signal block carries the MIB information, and the pdcch-ConfigSIB 1 information field in the MIB information includes the control resource set (Control Resource Set, CORESET) #0 information of the type0 PDCCH, which is used to indicate a RB of the type0 PDCCH in the frequency domain and a symbol of the type0 PDCCH in the time domain. The CORESET#0 information indicates one of the indexes in Table 4 below, and according to the index, the number of RBs and the number of symbols of CORESET#0, and the RB offset offset compared to the SSB are obtained. As can be seen from Table 4 below, when the subcarrier spacing is 15 kHz, the bandwidth of CORESET#0 can be configured as 24, 48, and 96 RBs, corresponding to bandwidths of 5 MHz, 10 MHz, and 20 MHz.

Table 4: Set of resource blocks and slot symbols of CORESET for Type0-PDCCH search space set when {SS/PBCH block, PDCCH} SCS is {15, 15} kHz for frequency bands with minimum channel bandwidth 5 MHz or 10 MHz

| index index | SS/PBCH block and CORESET multiplexing pattern multiplexing pattern | Number of RBs Number of RBs $N_{RB}^{CORESET}$ | Number of Symbols Number of Symbols $N_{symb}^{CORESE}$ symb | Offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |

(continued)

| index index | SS/PBCH block and CORESET multiplexing pattern multiplexing pattern | Number of RBs Number of RBs $N_{\mathrm{RB}}^{\mathrm{CORESET}}$ | Number of Symbols Number of Symbols $N_{\mathrm{symb}}^{\mathrm{CORESE}}$ symb | Offset (RBs) |
|---|---|---|---|---|
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved Reserved | | | |

For the low-capacity NR-light terminal device, the supported bandwidth may be limited, for example, only 10 MHz. When the bandwidth of CORESET#0 in the NR system is configured as 20 MHz (which can be obtained according to the number of resource blocks), then the NR-light terminal device will not be able to receive the type0 PDCCH information, thus unable to receive the SIB1 information, and will not be able to access the cell according to the system information.

In an embodiment, whether the corresponding cell allows the access of the NR-light UE may be explicitly indicated through the information carried by the PBCH in the SSB. However, the bit in the PBCH needs to be redefined, such as the reserved bit. However, the reserved bit that can be utilized at present is very limited.

Therefore, in an embodiment of the present application, the bandwidth information contained in the first SSB can be used to implicitly indicate whether the NR-light terminal device can access.

Optionally, the CORESET information in the PBCH contained in the first SSB may be used to implicitly indicate whether the NR-light terminal device can access.

In an embodiment, when the bandwidth indicated by the bandwidth information contained in the first SSB is less than or equal to the preset bandwidth, the NR-light terminal device can determine that the cell supports the access by the terminal device, and can use the type0 PDCCH search space and the CORESET information to blindly detect the PDCCH, then receive the SIB1, and accesses the cell according to the system information of the cell.

In an embodiment, when the bandwidth indicated by the bandwidth information contained in the first SSB is greater than the preset bandwidth, it is implicitly indicated that the cell does not support the access by the NR-light terminal device. The NR-light terminal device no longer needs to try to detect the PDCCH as well as receives the SIB 1. Specifically, the terminal device may continue to search for another SSB until the bandwidth of the CORESET indicated by the bandwidth information contained in the searched SSB is less than or equal to the preset bandwidth.

In an embodiment, the preset bandwidth may be the bandwidth supported by the current NR-light terminal device, or, may also be at least one bandwidth corresponding to the NR-light system.

In the method of an embodiment, the terminal device receives the first synchronization signal block SSB; the terminal device determines, according to the preset bandwidth and the bandwidth information contained in the first SSB, the target cell that supports the access by the terminal device, so that the terminal device can determine, according to the bandwidth information contains in the first SSB and the preset bandwidth, whether the cell corresponding to the first SSB is the target cell that supports the access by the terminal device, and if the cell corresponding to the first SSB is not the target cell that supports the access by the terminal device, then the terminal device does not need to blind detect the PDCCH of the cell, which saves the time for accessing the network. Further, whether the cell corresponding to the first SSB is the target cell is determined only according to the preset bandwidth and the bandwidth information contained in the first SSB, without adding additional signaling overhead, which has little impact on the existing NR system, and the complexity is relatively low.

On the basis of the foregoing embodiment, the step 102 may include the following specific implementations: if the bandwidth indicated by the bandwidth information is less than or equal to the preset bandwidth, the terminal device determines that the cell corresponding to the first SSB is the target cell that supports the access by the terminal device.

If the bandwidth indicated by the bandwidth information is greater than the preset bandwidth, the terminal device determines that the cell corresponding to the first SSB is not the target cell that supports the access by the terminal device.

Specifically, if the bandwidth indicated by the bandwidth information contained in the first SSB is less than or equal to the preset bandwidth, the terminal device determines that the cell corresponding to the first SSB is the target cell that supports the access by the terminal device. Further, the PDCCH can be blindly detected through the type0 PDCCH search space and CORESET information, and then the SIB 1 can be received, and the cell can be accessed according to the system information of the cell. If the bandwidth indicated by the bandwidth information contained in the first SSB is greater than the preset bandwidth, the terminal device determines that the cell corresponding to the first SSB is not the target cell that supports the access by the terminal device, and the terminal device does not need to blindly detect the PDCCH of the cell, nor the subsequent operation.

In an embodiment, before the terminal device determines that the cell corresponding to the first SSB is the target cell that supports the access by the terminal device, the method may further include:

The terminal device receives first indication information, where the first indication information is used to indicate whether the cell corresponding to the first SSB supports the access by the terminal device;

The terminal device determines that the cell corresponding to the first SSB is the target cell that supports the access by the terminal device, which may be implemented in the following manner:

if the first indication information indicates that the cell corresponding to the first SSB supports the access by the terminal device, the terminal device determines that the cell corresponding to the first SSB is the target cell that supports the access by the terminal device.

Specifically, in the case that the bandwidth indicated by the bandwidth information contained in the first SSB is less than or equal to the preset bandwidth, the terminal device may further receive the first indication information of the network device, and use the first indication information to determine whether the cell supports the access by the terminal device.

The first indication information may be carried by a system information block.

In the case that the bandwidth is less than or equal to the preset bandwidth, the terminal device may blindly detect the PDCCH, and then receive the system information block, such as the SIB1, and a field may be added to the SIB1 to carry the first indication information.

In this way, although the bandwidth indicated by the bandwidth information contained in the first SSB can satisfy the NR-light terminal device to receive the SIB1, the network device may not want the cell to be accessed by the terminal device, for example, when the cell is congested or other bandwidth information configured in the system information does not match the bandwidth of the terminal device, for example, the bandwidth of the initial partial bandwidth (Bandwidth Part, BWP) configured in the SIB1 is greater than the bandwidth supported by the terminal device.

If the first indication information indicates that the cell corresponding to the first SSB supports the access by the terminal device, the terminal device determines that the cell corresponding to the first SSB is the target cell supporting the access by the terminal device. The terminal device receives the SIB1 by receiving the PDCCH information, and then accesses the target cell.

In an embodiment, if the first indication information indicates that the cell corresponding to the first SSB does not support the access by the terminal device, the terminal device determines that the cell corresponding to the first SSB is not the target cell that supports the access by the terminal device.

In an embodiment, if the first indication information indicates that the cell corresponding to the first SSB does not support the access by the terminal device, the terminal device obtains the second SSB, where the cell corresponding to the second SSB is the target cell that supports the access by the terminal device.

Specifically, if the first indication information indicates that the cell corresponding to the first SSB does not support the access by the terminal device, the terminal device no longer attempts to detect the PDCCH and receives the SIB.

The first indication information can be carried by the system information block SIB, such as the SIB1, without modifying the structure of the first SSB, especially the structure of the PBCH contained in the first SSB, that is, without modifying the MIB information carried by the PBCH. The impact on the current NR system is relatively small and the complexity is relatively low.

In another embodiment, when the cell corresponding to the first SSB is not the target cell that supports the access by the terminal device, that is, when the cell corresponding to the first SSB does not support the access by the terminal device, the method may further include:

The terminal device obtains the second SSB, where the cell corresponding to the second SSB is the target cell that supports the access by the terminal device.

Specifically, if the cell corresponding to the first SSB does not support the access by the terminal device, the terminal device no longer attempts to detect the PDCCH and receives the SIB, but continues to search for another second SSB to find the target cell that supports the access by the terminal device. The cell corresponding to the first SSB does not support the access by the terminal device, which can be directly determined by the bandwidth indicated by the bandwidth information contained in the first SSB and the preset bandwidth, or further determined according to the first indication information, the embodiments of the present application are not limited to this.

In the above embodiment, the bandwidth information contained in the first SSB implicitly indicates whether the NR-light terminal device can access the cell, and further, whether the cell allows the NR-light terminal device to access can also be indicated through the first indication information, which enables the network to more flexibly control the NR-light terminal device to access the cell.

In an embodiment, the step "obtaining the second SSB" may be implemented as follows:

the terminal device determines the frequency domain position of the second SSB according to the frequency domain position of the first SSB;

the terminal device obtains the second SSB according to the frequency domain position of the second SSB.

Specifically, when the terminal device determines that the cell corresponding to the first SSB does not support the access by the terminal device, it may continue to search for the second SSB until the bandwidth indicated by the bandwidth information contained in the searched second SSB is less than or equal to the preset bandwidth, or the first indication information indicates that the cell corresponding to the second SSB supports the access by the terminal device. Further, the PDCCH may be detected according to the PDCCH search space and CORESET information contained in the second SSB, and then the SIB1 may be received, and the cell may be accessed according to the system information of the cell.

In order to reduce the search time of the terminal device and the delay of accessing the network, the terminal device determines the frequency domain position of the second SSB according to the currently known frequency domain position of the first SSB, and the terminal device obtains the second SSB according to the frequency domain position of the second SSB.

For example, as shown in FIG. 4, the terminal device searches for the second SSB around the frequency domain position of the first SSB, that is, searches for the second SSB within a range greater than and/or less than the frequency of the first SSB.

In an embodiment, the frequency domain position of the second SSB may be determined in the following manners:

one implementation manner:

the terminal device determines the frequency domain position of the second SSB according to the frequency domain position of the first SSB and the preset frequency domain offset.

Specifically, the frequency domain position of the first SSB can be obtained by the synchronization raster (see the introduction of the synchronization raster), and then the frequency domain position of the second SSB is obtained according to the frequency domain position of the first SSB and the preset frequency domain offset.

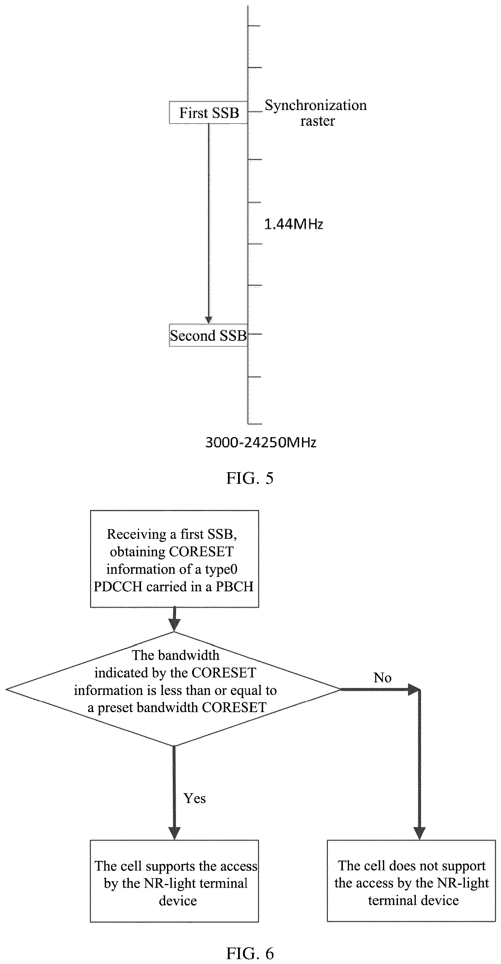

As shown in FIG. 5, for the network device, the first SSB indicating that the access by the NR-light terminal device is not supported and the second SSB indicating that the access by the NR-light terminal device is supported have the preset frequency domain offset. When the NR-light terminal device detects the first SSB and determines that the cell corresponding to the first SSB does not support the access by the terminal device, the NR-light terminal device then determines, according to the preset frequency domain offset, the frequency domain position of the second SSB corresponding to the cell that supports the access by the NR-light terminal device, such as the position of the synchronization raster corresponding to the second SSB. In FIG. 5, the second SSB is searched downward; in other embodiments, the second SSB may also be searched upward. The present application does not limit to this.

In an embodiment, on the basis of the preset frequency domain offset, the network device can also give the search direction through the indication information, for example, whether the frequency is high or low relative to the first SSB, that is, the range of the frequency domain position relative to the first SSB.

In an embodiment, the preset frequency domain offset may be the number of synchronization raster.

In an embodiment, the preset frequency domain offset may be one frequency domain offset value or multiple values, which is not limited in the embodiment of the present application.

In the above specific embodiment, whether the NR-light terminal device can access the cell is implicitly indicated by the bandwidth information contained in the first SSB, if the cell corresponding to the first SSB does not support the access by the terminal device, the frequency domain position of the second SSB corresponding to the cell that supports the access by the NR-light terminal device is further determined according to the preset frequency domain offset information, which can reduce the complexity and power consumption of the NR-light terminal device searching for the second SSB, and reduce the access delay. Moreover, this method does not need to introduce indication information, the complexity is low, has little impact on the existing NR system, and can be compatible with the existing NR system.

Another implementation manner:

the terminal device determines the frequency domain position of the second SSB according to the frequency domain position of the first SSB and the second indication information, where the second indication information is used to indicate the relationship between the frequency domain position of the second SSB and the frequency domain position of the first SSB.

In an embodiment, before determining the frequency domain position of the second SSB, the terminal device may obtain the second indication information from the network device.

The physical broadcast channel PBCH contained in the first SSB carries the second indication information, or the system information block SIB carries the second indication information.

Specifically, the second indication information is used to indicate the NR-light terminal device to search for the relationship between the frequency domain position of the second SSB corresponding to the cell that can support its access and the frequency domain position of the first SSB, for example, by indicating the range information of frequency domain position of the second SSB, or, the frequency domain offset between the second SSB and the first SSB, that is, the offset between the frequency domain position of the second SSB and the frequency domain position of the first SSB.

For example, the second indication information (e.g., 1 bit) is used to indicate whether the frequency domain position of the second SSB is higher or lower in frequency than the frequency domain position of the first SSB. After obtaining the second indication information, the NR-light terminal device can continue to search for the second SSB in the corresponding frequency domain range with the frequency domain position of the first SSB as a starting point. As shown in FIG. 4, the terminal device searches for the second SSB within the range lower than the frequency of the first SSB, or searches for the second SSB within the range higher than the frequency of the first SSB, for example, when the frequency domain range is 3 GHz-24 GHz, the interval of the synchronization raster is 1.44 MHz, and the terminal device searches for the second SSB according to the position of the synchronization raster of the first SSB. When an SSB is detected, whether the bandwidth indicated by the bandwidth information contained in the SSB is greater than the preset bandwidth is determined, and if not, it is determined that the cell corresponding to the SSB supports the access by the terminal device, or the cell corresponding to the SSB supports the access by the terminal device is further determined according to the first indication information.

In an embodiment, the frequency range of the second SSB may also be indicated by the second indication information, for example, a MHz-b MHz.

In an embodiment, the second indication information may further indicate more accurate frequency domain position information of the second SSB corresponding to the cell that supports the access by the NR-light terminal device. For example, the frequency domain interval between the second SSB and the current first SSB is specifically indicated, such as the number of synchronization raster in the interval. This approach may require more bit fields.

The above second indication information may be indicated by a specific bit field in the PBCH contained in the SSB, or indicated by a specific bit field in other information, such as the system information block SIB.

In the above specific implementation manner, in the case that it is determined that the cell corresponding to the current first SSB does not support the access by the terminal device, further, through the second indication information, the NR-light terminal device is indicated to search for the frequency domain position of the second SSB corresponding to the cell that can support its access, which can reduce the blind detection of the NR-light terminal device, reduce the complexity and power consumption of the NR-light terminal device to search for the SSB, and reduce the access delay.

In an embodiment, as shown in FIG. 6, the terminal device receives the first SSB, obtains the CORESET information of the type0 PDCCH carried in the PBCH contained in the first SSB, and determines, according to the bandwidth indicated by the CORESET information and the preset bandwidth, whether the cell corresponding to the first SSB supports the access by the terminal device, for example, the bandwidth indicated by the CORESET information is less than or equal to the preset bandwidth, then it is determined that the cell supports the access by the NR-light terminal device; if the bandwidth indicated by the CORESET information is greater than the preset bandwidth, then it is determined that the cell does not support the access by the NR-light terminal device.

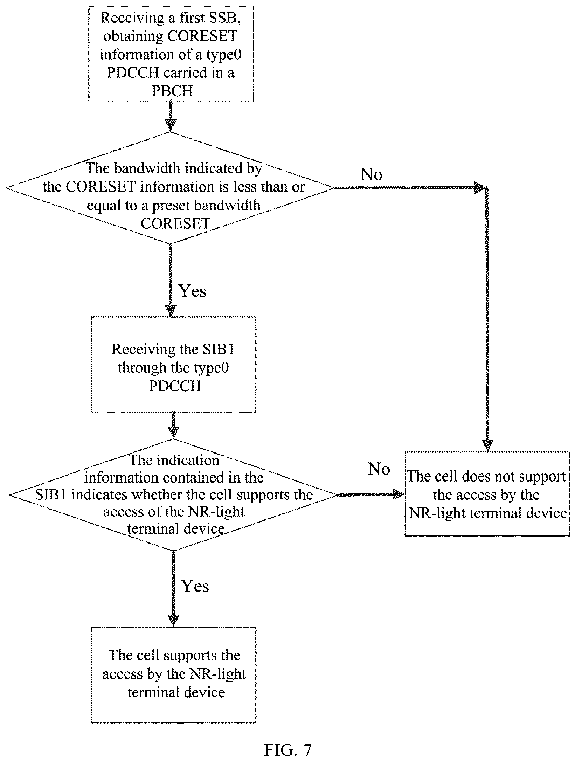

In an embodiment, as shown in FIG. 7, the terminal device receives the first SSB, obtains the CORESET information of the type0 PDCCH carried in the PBCH contained in the first SSB, and determines, according to the bandwidth indicated by the CORESET information and the preset bandwidth, whether the cell corresponding to the first SSB supports the access by the terminal device, for example, if the bandwidth indicated by the CORESET information is greater than the preset bandwidth, it is determined that the cell does not support the access by the NR-light terminal device; if the bandwidth indicated by the CORESET information is less than or equal to the preset bandwidth, the terminal device then further receives the SIB1 through the type0 PDCCH, and determines the indication information in the SIB1 indicates whether the cell supports the access by the NR-light terminal device. If the indication information indicates that the cell supports the access by the NR-light terminal device, it is determined that the cell supports the access by the NR-light terminal device; if the indication information indicates that the cell does not support the access by the NR-light terminal device, it is determined that the cell does not support the access by the NR-light terminal device.

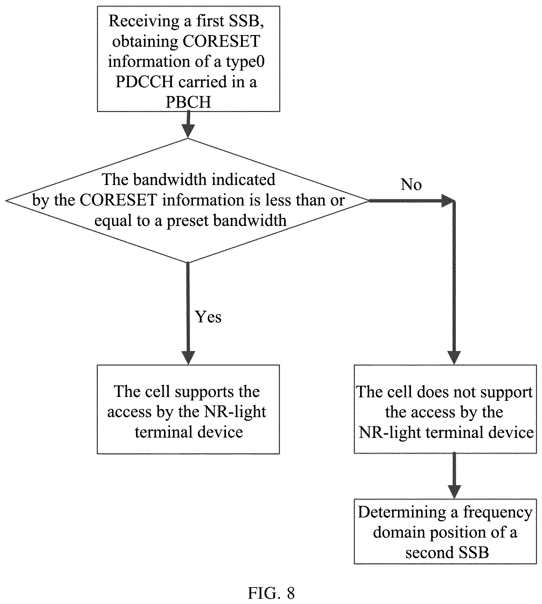

In an embodiment, as shown in FIG. 8, the terminal device receives the first SSB, obtains the CORESET information of the type0 PDCCH carried in the PBCH contained in the first SSB, and can determine, according to the bandwidth indicated by the CORESET information and the preset bandwidth, whether the cell corresponding to the first SSB supports the access by the terminal device. For example, if the bandwidth indicated by the CORESET information is less than or equal to the preset bandwidth, it is determined that the cell supports the access by the NR-light terminal device; if the bandwidth indicated by the CORESET information is greater than the preset bandwidth, then it is determined that the cell does not support the access by the NR-light terminal device; if the indication information indicates that the cell does not support the access by the NR-light terminal device, the frequency domain position of the second SSB is determined, that is, the second SSB is obtained according to the frequency domain position of the second SSB, and the cell corresponding to the second SSB is the target cell that supports the access by the NR-light terminal device.

An embodiment of the present application further provides a cell access method, and the specific implementation steps of the embodiment include:

the network device sends the first synchronization signal block SSB, where the first SSB includes the bandwidth information, and the bandwidth information and the preset bandwidth are used to indicate the target cell that supports access.

In an embodiment, the network device may implicitly indicate the target cell that supports access through the bandwidth information contained in the first SSB, for example, indicate to the NR-light terminal device whether the cell corresponding to the first SSB is the target cell that supports access.

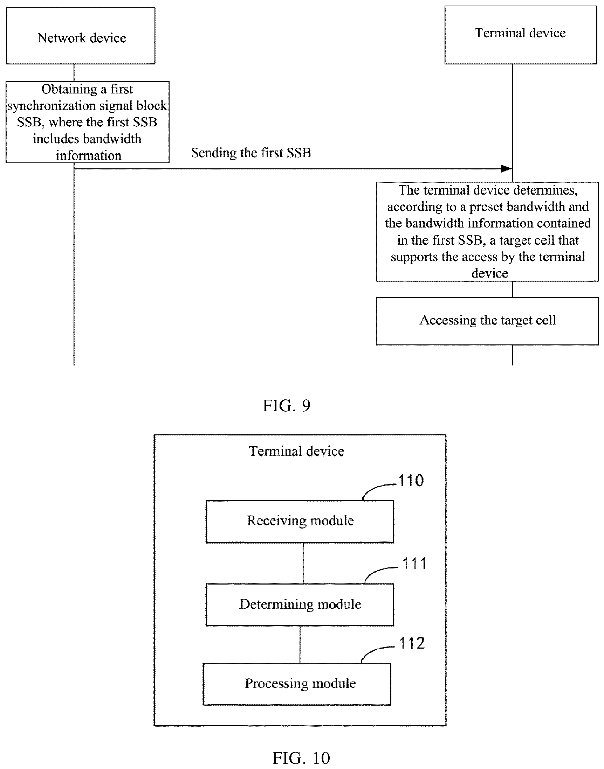

In an embodiment, as shown in FIG. 9, the network device first obtains the first SSB, where the first SSB includes bandwidth information, which is used to indicate the target cell that supports the access. The terminal device may determine, according to the bandwidth information and the preset bandwidth, the target cell that supports the access by the terminal device.

In an embodiment, if the bandwidth indicated by the bandwidth information is less than or equal to the preset bandwidth, the cell corresponding to the first SSB is the target cell; if the bandwidth indicated by the bandwidth information is greater than the preset bandwidth, the cell corresponding to the first SSB is not the target cell.

In an embodiment, when the bandwidth indicated by the bandwidth information contained in the first SSB is less than or equal to the preset bandwidth, the NR-light terminal device can determine that the cell supports the access by the terminal device, and can blindly detect the PDCCH through the type0 PDCCH search space and the CORESET information, and then receives SIB1, and accesses the cell according to the system information of the cell.

In an embodiment, when the bandwidth indicated by the bandwidth information contained in the first SSB is greater than the preset bandwidth, it is implicitly indicated that the cell does not support the access by the NR-light terminal device. The NR-light terminal device does not need to try to detect PDCCH or receive SIB1. Specifically, the terminal device may continue to search for another SSB until the bandwidth of the CORESET indicated by the bandwidth information contained in the searched SSB is less than or equal to the preset bandwidth.

In an embodiment, the preset bandwidth may be the bandwidth supported by the current NR-light terminal device, or, may also be at least one bandwidth corresponding to the NR-light system.

In an embodiment, after the network device sends the first synchronization signal block SSB, the method further includes:

the network device sends the first indication information, where the first indication information is used to indicate whether the cell corresponding to the first SSB is the target cell that supports the access.

Specifically, in the case that the bandwidth indicated by the bandwidth information contained in the first SSB is less than or equal to the preset bandwidth, the network device may further send the first indication information to indicate whether the cell corresponding to the first SSB is the target cell that supports the access. The terminal device may further receive the first indication information of the network device, and determine, according to the first indication information, whether the cell supports the access by the terminal device.

In an embodiment, when the cell corresponding to the first SSB is not the target cell that supports the access by the terminal device, that is, when the cell corresponding to the first SSB does not support the access by the terminal device, the method of this embodiment may further include:

the network device sends the second SSB, where the cell corresponding to the second SSB is the target cell that supports access.

In an embodiment, the method of this embodiment may further include:

the network device sends second indication information, where the second indication information is used to indicate the relationship between the frequency domain position of the second SSB and the frequency domain position of the first SSB.

In an embodiment, the second indication information is used to indicate: the range of the frequency domain position of the second SSB relative to the frequency domain position of the first SSB, and/or the frequency domain offset between the second SSB and the first SSB.

In an embodiment, the frequency domain offset includes the number of the synchronization raster raster.

In an embodiment, the system information block SIB carries the first indication information.

In an embodiment, the physical broadcast channel PBCH contained in the first SSB carries the second indication information, or the system information block SIB carries the second indication information.

In an embodiment, the control resource set CORESET information contained in the first SSB includes the bandwidth information.

In the method of the embodiment, the network device sends the first synchronization signal block SSB, where the bandwidth information contained in the first SSB is used to indicate the target cell that supports the access. In the above solution, the target cell that supports access is determined according to the bandwidth information contained in the first SSB and the preset bandwidth, which does not adding additional signaling overhead, has little impact on the existing NR system, and has low complexity. Further, if the cell corresponding to the first SSB is not the target cell that supports the access, the terminal device does not need to blindly detect the PDCCH of the cell, which saves the time for accessing the network.

FIG. 10 is a schematic structural diagram of a first embodiment of a terminal device provided by this application. As shown in FIG. 10, the terminal device includes:

> a receiving module 110, configured to receive the first synchronization signal block SSB;
> a determining module 111, configured to determine, according to the preset bandwidth and the bandwidth information contained in the first SSB, the target cell that supports the access by the terminal device; and
> a processing module 112, configured to access the target cell.

In a possible implementation manner, the determining module 111 is specifically configured to:

> determine that a cell corresponding to the first SSB is the target cell if a bandwidth indicated by the bandwidth information is less than or equal to the preset bandwidth;
> determine that the cell corresponding to the first SSB is not the target cell if the bandwidth indicated by the bandwidth information is greater than the preset bandwidth.

In a possible implementation manner, the receiving module 110 is further configured to:
receive first indication information; the first indication information is used to indicate whether the cell corresponding to the first SSB supports the access by the terminal device;
The determining module 111 is specifically configured to:
determine that the cell corresponding to the first SSB is the target cell if the first indication information indicates that the cell corresponding to the first SSB supports the access by the terminal device .
In a possible implementation manner, the determining module 111 is specifically configured to:
determine that the cell corresponding to the first SSB is not the target cell if the first indication information indicates that the cell corresponding to the first SSB does not support the access by the terminal device .
In a possible implementation, further including:
an obtaining module, configured to obtain the second SSB, where the cell corresponding to the second SSB is the target cell that supports the access by the terminal device.
In a possible implementation, the obtaining module includes:

> a determining subunit, configured to determine a frequency domain position of the second SSB according to a frequency domain position of the first SSB;
> an obtaining subunit, configured to obtain the second SSB according to the frequency domain position of the second SSB.

In a possible implementation manner, the determining subunit is configured to:

> determine the frequency domain position of the second SSB according to the frequency domain position of the first SSB and a preset frequency domain offset; or,
> determine the frequency domain position of the second SSB according to the frequency domain position of the first SSB and second indication information, wherein the second indication information is used to indicate a relationship between the frequency domain position of the second SSB and the frequency domain position of the first SSB.

In a possible implementation manner, the second indication information is used to indicate: the range of the frequency domain position of the second SSB relative to the frequency domain position of the first SSB, and/or the frequency domain offset between the second SSB and the first SSB.
In a possible implementation manner, the frequency domain offset includes the number of the synchronization raster raster.
In a possible implementation manner, the system information block SIB carries the first indication information.
In a possible implementation manner, the physical broadcast channel PBCH contained in the first SSB carries the second indication information, or the system information block SIB carries the second indication information.
In a possible implementation manner, the control resource set CORESET information contained in the first SSB includes the bandwidth information.
The terminal device in the embodiment is used to implement the technical solution on the terminal device side. For the implementation principle and technical effect, refer to the foregoing method embodiments on the terminal device side, which will not be repeated here.

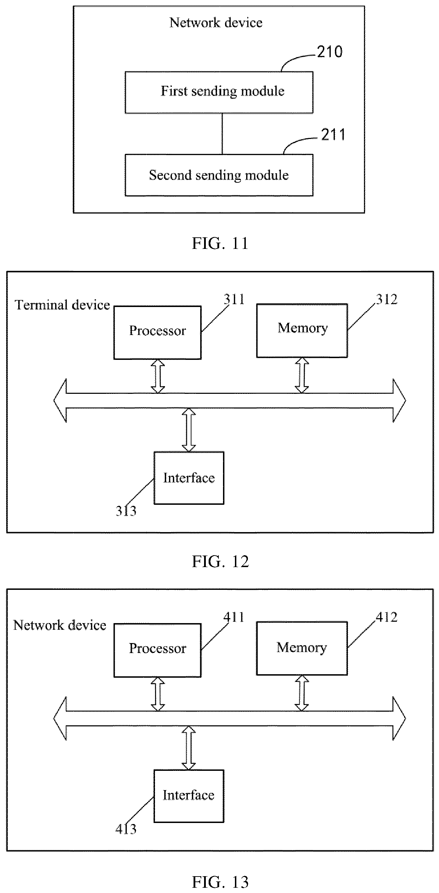

FIG. 11 is a schematic structural diagram of a first embodiment of a network device provided by the present application. As shown in FIG. 11, the network device includes:
a first sending module 210, configured to send the first synchronization signal block SSB, where the first SSB includes bandwidth information, and the bandwidth information and the preset bandwidth are used to indicate the target cell that supports the access.

In a possible implementation manner, a cell corresponding to the first SSB is the target cell if a bandwidth indicated by the bandwidth information is less than or equal to the preset bandwidth; the cell corresponding to the first SSB is not the target cell if the bandwidth indicated by the bandwidth information is greater than the preset bandwidth.

In a possible implementation manner, the first sending module 210 is further configured to:

send the first indication information, where the first indication information is used to indicate whether the cell corresponding to the first SSB is the target cell that supports the access.

In a possible implementation, further including:

a second sending module 211, configured to send the second SSB, where the cell corresponding to the second SSB is the target cell that supports the access.

In a possible implementation manner, the sending module 211 is further configured to:

send the second indication information, where the second indication information is used to indicate the relationship between the frequency domain position of the second SSB and the frequency domain position of the first SSB.

In a possible implementation manner, the second indication information is used to indicate: the range of the frequency domain position of the second SSB relative to the frequency domain position of the first SSB, and/or, the frequency domain offset of the second SSB and the first SSB.

In a possible implementation manner, the frequency domain offset includes the number of the synchronization raster raster.

In a possible implementation manner, the system information block SIB carries the first indication information.

In a possible implementation manner, the physical broadcast channel PBCH contained in the first SSB carries the second indication information, or the system information block SIB carries the second indication information.

In a possible implementation manner, the control resource set CORESET information contained in the first SSB includes the bandwidth information.

The network device in this embodiment is used to implement the technical solution on the network device side. For the implementation principle and technical effect, refer to the foregoing method embodiments on the network device side, which will not be repeated here.

FIG. 12 is a schematic structural diagram of a fifth embodiment of the terminal device provided by this application. As shown in FIG. 12, the terminal device includes:

a processor 311, a memory 312, an interface 313 for communicating with the network device;
the memory 312 stores computer-executable instructions;
the processor 311 executes the computer-executed instructions stored in the memory, enables the processor 311 to execute the technical solutions on the terminal device side according to any of the foregoing method embodiments.

FIG. 12 is a simple design of the terminal device. The embodiments of the present application do not limit the number of the processor and the memory in the terminal device. FIG. 12 only uses 1 as an example for description.

FIG. 13 is a schematic structural diagram of a second embodiment of the network device provided by the present application. As shown in FIG. 13, the network device includes:

a processor 411, a memory 412, an interface 413 for communicating with the terminal device;
the memory 412 stores computer-executable instructions;
the processor 411 executes the computer-executed instructions stored in the memory 412, enables the processor 411 to execute the technical solution on the network device side according to any of the foregoing method embodiments.

FIG. 13 is a simple design of the network device. The embodiments of the present application do not limit the number of the processor and the memory in the network device. FIG. 13 only uses 1 as an example for description.

In a specific implementation of the terminal device shown in FIG. 12 and the network device shown in FIG. 13, the memory, the processor, and the interface may be connected through a bus line. Optionally, the memory may be integrated inside the processor.

An embodiment of the present application further provides a computer-readable storage medium, where computer-executable instructions are stored in the computer-readable storage medium, when the computer-executable instructions are executed by a processor, is used to implement the technical solution of the terminal device according to any of the foregoing method embodiments.

An embodiment of the present application further provides a computer-readable storage medium, where computer-executable instructions are stored in the computer-readable storage medium, when the computer-executable instructions are executed by a processor, is used to implement the technical solution of the network device according to any of the foregoing method embodiments.

An embodiment of the present application further provides a program. When executed by the processor, the program is used to execute the technical solution of the terminal device according to any of the foregoing method embodiments.

An embodiment of the present application further provides a program. When executed by the processor, the program is used to execute the technical solution of the network device according to any of the foregoing method embodiments.

Optionally, the above-mentioned processor may be a chip.

An embodiment of the present application further provide a computer program product, including program instructions, where the program instructions are used to implement the technical solution of the terminal device according to any of the foregoing method embodiments.

An embodiment of the present application further provides a computer program product, including program instructions, where the program instructions are used to implement the technical solution of the network device according to any of the foregoing method embodiments.

An embodiment of the present application further provides a chip, including: a processing module and a communication interface, where the processing module can execute the technical solutions on the terminal device side according to any of the foregoing method embodiments.

Further, the chip also includes a storage module (e.g., a memory), the storage module is used for storing instructions, the processing module is used for executing the instructions stored in the storage module, and the execution of the instructions stored in the storage module enables the processing module to execute the technical solution on the terminal device side according to any of the foregoing method embodiments.

An embodiment of the present application further provides a chip, including: a processing module and a communication interface, where the processing module can execute the technical solution on the network device side according to any of the foregoing method embodiments.

Further, the chip also includes a storage module (e.g., a memory), the storage module is used for storing instructions, the processing module is used for executing the instructions stored in the storage module, and the execution of the instructions stored in the storage module enables the processing module to execute the technical solutions on the network device side according to any of the foregoing method embodiments.

In the several embodiments provided in this application, it should be understood that the disclosed apparatus and method may be implemented in other manners. For example, the device embodiments described above are only illustrative. For example, the division of the modules is only a logical function division. In actual implementation, there may be other division methods. For example, multiple modules may be combined or integrated to another system, or some features can be ignored, or not implemented. On the other hand, the mutual coupling or direct coupling or communication connection shown or discussed may be through some interfaces, and the indirect coupling or communication connection of modules may be in electrical, mechanical or other forms.

In the specific implementation of the above-mentioned terminal device and network device, it should be understood that the processor may be a central processing unit (English: Central Processing Unit, CPU for short), or another general purpose processor, a digital signal processor (English: Digital Signal Processor, DSP for short), application specific integrated circuit (English: Application Specific Integrated Circuit, ASIC for short), or the like. The general purpose processor may be a microprocessor or the processor may be any conventional processor or the like. The steps in combination with the method disclosed in the present application can be directly embodied as executed by a hardware processor, or executed by a combination of the hardware and the software module in the processor.

All or part of the steps for implementing the above method embodiments may be completed by hardware related to program instructions. The aforementioned program can be stored in a readable memory. When the program is executed, the steps included in the above method embodiments are executed; and the aforementioned memory (storage medium) includes: a read-only memory (English: read-only memory, ROM for short), a RAM, a flash memory, a hard disk, a solid state drive, a magnetic tape (English: magnetic tape), a floppy disk (English: floppy disk), an optical disc (English: optical disc) and any combination thereof.

## Claims

1. A cell access method, comprising:

   receiving, by a terminal device, a first synchronization signal block SSB;
   determining, by the terminal device, according to a preset bandwidth and bandwidth information in the first SSB, a target cell that supports access by the terminal device; and
   accessing, by the terminal device, the target cell.

2. The method according to claim 1, wherein the determining, by the terminal device, according to the preset bandwidth and the bandwidth information in the first SSB, the target cell that supports the access by the terminal device comprises:

if a bandwidth indicated by the bandwidth information is less than or equal to the preset bandwidth, determining, by the terminal device, that a cell corresponding to the first SSB is the target cell; and
if the bandwidth indicated by the bandwidth information is greater than the preset bandwidth, determining, by the terminal device, that the cell corresponding to the first SSB is not the target cell.

3. The method according to claim 2, wherein before the determining, by the terminal device, that the cell corresponding to the first SSB is a target cell that supports the access by the terminal device, the method further comprises:

receiving, by the terminal device, first indication information, wherein the first indication information is used to indicate whether the cell corresponding to the first SSB supports the access by the terminal device;
the determining, by the terminal device, that the cell corresponding to the first SSB is the target cell, comprising:
if the first indication information indicates that the cell corresponding to the first SSB supports the access by the terminal device, determining, by the terminal device, that the cell corresponding to the first SSB is the target cell.

4. The method according to claim 3, further comprising:
if the first indication information indicates that the cell corresponding to the first SSB does not support the access by the terminal device, determining, by the terminal device, that the cell corresponding to the first SSB is not the target cell.

5. The method according to claim 2 or 4, wherein after the determining, by the terminal device, that the cell corresponding to the first SSB is not the target cell, the method further comprises:
obtaining, by the terminal device, a second SSB, wherein a cell corresponding to the second SSB is the target cell that supports the access by the terminal device.

6. The method according to claim 5, wherein the obtaining, by the terminal device, the second SSB comprises:

determining, by the terminal device, a frequency domain position of the second SSB according to a frequency domain position of the first SSB; and
obtaining, by the terminal device, the second SSB according to the frequency domain position of the second SSB.

7. The method according to claim 6, wherein the determining, by the terminal device, the frequency domain position of the second SSB according to the frequency domain position of the first SSB comprises:

determining, by the terminal device, the frequency domain position of the second SSB according to the frequency domain position of the first SSB and a preset frequency domain offset; or,
determining, by the terminal device, the frequency domain position of the second SSB according to the frequency domain position of the first SSB and second indication information, wherein the second indication information is used to indicate a relationship between the frequency domain position of the second SSB and the frequency domain position of the first SSB.

8. The method according to claim 7, wherein the second indication information is used to indicate: a range of the frequency domain position of the second SSB relative to the frequency domain position of the first SSB, and/or, a frequency domain offset between the second SSB and the first SSB.

9. The method according to claim 7 or 8, wherein the frequency domain offset comprises a number of a synchronization raster raster.

10. The method according to any one of claims 3 to 9, wherein a system information block SIB carries the first indication information.

11. The method according to any one of claims 7 to 10, wherein a physical broadcast channel PBCH contained in the first SSB carries the second indication information, or a system information block SIB carries the second indication information.

12. The method according to any one of claims 1 to 11, wherein control resource set CORESET information contained in the first SSB comprises the bandwidth information.

13. A cell access method, comprising:

sending, by a network device, a first synchronization signal block SSB, wherein the first SSB comprises bandwidth information, and the bandwidth information and a preset bandwidth are used to indicate a target cell that supports access.

14. The method according to claim 13, wherein a cell corresponding to the first SSB is the target cell if a bandwidth indicated by the bandwidth information is less than or equal to the preset bandwidth; the cell corresponding to the first SSB is not the target cell if the bandwidth indicated by the bandwidth information is greater than the preset bandwidth.

15. The method according to claim 13 or 14, wherein after the sending, by the network device, the first synchronization signal block SSB, the method further comprises:

sending, by the network device, first indication information, wherein the first indication information is used to indicate whether the cell corresponding to the first SSB is the target cell that supports access.

16. The method according to any one of claims 13 to 15, further comprising:

sending, by the network device, a second SSB, wherein a cell corresponding to the second SSB is the target cell that supports access.

17. The method according to claim 16, further comprising:

sending, by the network device, second indication information, wherein the second indication information is used to indicate a relationship between a frequency domain position of the second SSB and a frequency domain position of the first SSB.

18. The method according to claim 17, wherein the second indication information is used to indicate: a range of the frequency domain position of the second SSB relative to the frequency domain position of the first SSB, and/or, a frequency domain offset between the second SSB and the first SSB.

19. The method according to claim 18, wherein the frequency domain offset comprises a number of a synchronization raster raster.

20. The method according to any one of claims 15 to 19, wherein a system information block SIB carries the first indication information.

21. The method according to any one of claims 17 to 20, wherein a physical broadcast channel PBCH contained in the first SSB carries the second indication information, or a system information block SIB carries the second indication information.

22. The method according to any one of claims 13 to 21, wherein control resource set CORESET information contained in the first SSB comprises the bandwidth information.

23. A terminal device, comprising:

a receiving module, configured to receive a first synchronization signal block SSB;
a determining module, configured to determine, according to a preset bandwidth and bandwidth information contained in the first SSB, a target cell that supports access by the terminal device; and
a processing module, configured to access the target cell.

24. The terminal device according to claim 23, wherein the determining module is specifically configured to:

determine that a cell corresponding to the first SSB is the target cell if a bandwidth indicated by the bandwidth information is less than or equal to the preset bandwidth;
determine that the cell corresponding to the first SSB is not the target cell if the bandwidth indicated by the bandwidth information is greater than the preset bandwidth.

**25.** The terminal device according to claim 24, wherein the receiving module is further configured to:

receive first indication information, wherein the first indication information is used to indicate whether the cell corresponding to the first SSB supports the access by the terminal device;
the determining module is specifically configured to:
determine that the cell corresponding to the first SSB is the target cell if the first indication information indicates that the cell corresponding to the first SSB supports the access by the terminal device.

**26.** The terminal device according to claim 25, wherein the determining module is specifically configured to:
determine that the cell corresponding to the first SSB is not the target cell if the first indication information indicates that the cell corresponding to the first SSB does not support the access by the terminal device.

**27.** The terminal device according to claim 24 or 26, further comprising:
an obtaining module, configured to obtain a second SSB, wherein a cell corresponding to the second SSB is the target cell that supports the access by the terminal device.

**28.** The terminal device according to claim 27, wherein the obtaining module comprises:

a determining subunit, configured to determine a frequency domain position of the second SSB according to a frequency domain position of the first SSB;
an obtaining subunit, configured to obtain the second SSB according to the frequency domain position of the second SSB.

**29.** The terminal device according to claim 28, wherein the determining subunit is configured to:

determine the frequency domain position of the second SSB according to the frequency domain position of the first SSB and a preset frequency domain offset; or,
determine the frequency domain position of the second SSB according to the frequency domain position of the first SSB and second indication information, wherein the second indication information is used to indicate a relationship between the frequency domain position of the second SSB and the frequency domain position of the first SSB.

**30.** The terminal device according to claim 29, wherein the second indication information is used to indicate: a range of the frequency domain position of the second SSB relative to the frequency domain position of the first SSB, and/or, the frequency domain offset between the second SSB and the first SSB.

**31.** The terminal device according to claim 29 or 30, wherein the frequency domain offset comprises a number of a synchronization raster raster.

**32.** The terminal device according to any one of claims 25 to 31, wherein a system information block SIB carries the first indication information.

**33.** The terminal device according to any one of claims 29 to 31, wherein a physical broadcast channel PBCH contained in the first SSB carries the second indication information, or a system information block SIB carries the second indication information.

**34.** The terminal device according to any one of claims 23 to 33, wherein control resource set CORESET information contained in the first SSB comprises the bandwidth information.

**35.** A network device, comprising:
a first sending module, configured to send a first synchronization signal block SSB, wherein the first SSB comprises bandwidth information, and the bandwidth information and a preset bandwidth are used to indicate a target cell that supports access.

**36.** The network device according to claim 35, wherein a cell corresponding to the first SSB is the target cell if a bandwidth indicated by the bandwidth information is less than or equal to the preset bandwidth; the cell corresponding to the first SSB is not the target cell if the bandwidth indicated by the bandwidth information is greater than the preset bandwidth.

**37.** The network device according to claim 35 or 36, wherein the first sending module is further configured to:
send first indication information, wherein the first indication information is used to indicate whether the cell corresponding to the first SSB is the target cell that supports access.

**38.** The network device of claim 37, further comprising:
a second sending module, configured to send a second SSB, wherein a cell corresponding to the second SSB is the target cell that supports access.

**39.** The network device according to claim 38, wherein the second sending module is further configured to:
send second indication information, wherein the second indication information is used to indicate a relationship between a frequency domain position of the second SSB and a frequency domain position of the first SSB.

**40.** The network device according to claim 39, wherein the second indication information is used to indicate: a range of the frequency domain position of the second SSB relative to the frequency domain position of the first SSB, and/or, a frequency domain offset between the second SSB and the first SSB.

**41.** The network device according to claim 40, wherein the frequency domain offset comprises a number of a synchronization raster raster.

**42.** The network device according to any one of claims 37 to 41, wherein a system information block SIB carries the first indication information.

**43.** The network device according to any one of claims 38 to 41, wherein a physical broadcast channel PBCH contained in the first SSB carries the second indication information, or a system information block SIB carries the second indication information.

**44.** The network device according to any one of claims 35 to 43, wherein control resource set CORESET information contained in the first SSB comprises the bandwidth information.

**45.** A terminal device, comprising:

a processor, a memory, an interface for communicating with a network device;
the memory stores computer-executable instructions;
the processor executes the computer-executable instructions stored in the memory, enabling the processor to execute the cell access method according to any one of claims 1 to 12.

**46.** A network device, comprising:

a processor, a memory, an interface for communicating with a terminal device;
the memory stores computer-executable instructions;
the processor executes the computer-executable instructions stored in the memory, enabling the processor to execute the cell access method according to any one of claims 13 to 22.

**47.** A computer-readable storage medium, wherein computer-executable instructions are stored in the computer-readable storage medium, and when the computer-executable instructions are executed by a processor, are used to implement the cell access method according to any one of claims 1 to 12.

**48.** A computer-readable storage medium, wherein computer-executable instructions are stored in the computer-readable storage medium, and when the computer-executable instructions are executed by a processor, are used to implement the cell access method according to any one of claims 13 to 22.

FIG. 1

FIG. 2

A terminal device receives a first synchronization signal block SSB    101

The terminal device determines, according to a preset bandwidth and bandwidth information contained in the first SSB, a target cell that supports the access by the terminal device    102

The terminal device accesses the target cell    103

FIG. 3

First SSB ——— Synchronization raster

1.44MHz

3000-24250MHz

FIG. 4

First SSB

Synchronization raster

1.44MHz

Second SSB

3000-24250MHz

FIG. 5

Receiving a first SSB, obtaining CORESET information of a type0 PDCCH carried in a PBCH

The bandwidth indicated by the CORESET information is less than or equal to a preset bandwidth CORESET

No

Yes

The cell supports the access by the NR-light terminal device

The cell does not support the access by the NR-light terminal device

FIG. 6

Receiving a first SSB,
obtaining CORESET
information of a type0
PDCCH carried in a
PBCH

The bandwidth indicated by
the CORESET information is less than or
equal to a preset bandwidth
CORESET

No

Yes

Receiving the SIB1
through the type0
PDCCH

The indication
information contained in the
SIB1 indicates whether the cell supports the
access of the NR-light
terminal device

No

The cell does not support
the access by the
NR-light terminal device

Yes

The cell supports the
access by the NR-light
terminal device

FIG. 7

Receiving a first SSB,
obtaining CORESET
information of a type0
PDCCH carried in a
PBCH

The bandwidth indicated
by the CORESET information is less than or
equal to a preset bandwidth

No

Yes

The cell supports the
access by the NR-light
terminal device

The cell does not support
the access by the
NR-light terminal device

Determining a frequency
domain position of a
second SSB

FIG. 8

| Network device | | Terminal device |
| --- | --- | --- |

Obtaining a first
synchronization signal block
SSB, where the first SSB
includes bandwidth
information

Sending the first SSB →

The terminal device determines,
according to a preset bandwidth and
the bandwidth information contained
in the first SSB, a target cell that
supports the access by the terminal
device

Accessing the target cell

FIG. 9

Terminal device

Receiving module 110

Determining module 111

Processing module 112

FIG. 10

Network device

First sending module — 210

Second sending module — 211

FIG. 11

Terminal device

Processor 311

Memory 312

Interface

313

FIG. 12

Network device

Processor 411

Memory 412

Interface

413

FIG. 13

<table>
<tr><td colspan="2" align="center">**INTERNATIONAL SEARCH REPORT**</td><td colspan="2">International application No.<br><br>**PCT/CN2020/073314**</td></tr>
<tr><td colspan="4">**A.    CLASSIFICATION OF SUBJECT MATTER**<br>H04W 72/12(2009.01)i<br><br>According to International Patent Classification (IPC) or to both national classification and IPC</td></tr>
<tr><td colspan="4">**B.    FIELDS SEARCHED**</td></tr>
<tr><td colspan="4">Minimum documentation searched (classification system followed by classification symbols)<br>H04W H04L H04Q</td></tr>
<tr><td colspan="4">Documentation searched other than minimum documentation to the extent that such documents are included in the fields searched</td></tr>
<tr><td colspan="4">Electronic data base consulted during the international search (name of data base and, where practicable, search terms used)<br>DWPI, EPODOC, CNPAT, 3GPP: 带宽 支持 检测 接入 SSB 同步信号 bandwidth BW support PDCCH detect access MIB SIB</td></tr>
<tr><td colspan="4">**C.    DOCUMENTS CONSIDERED TO BE RELEVANT**</td></tr>
<tr><td>Category*</td><td colspan="2">Citation of document, with indication, where appropriate, of the relevant passages</td><td>Relevant to claim No.</td></tr>
<tr><td>Y</td><td colspan="2">CN 107432028 A (SHARP CORPORATION) 01 December 2017 (2017-12-01)<br>description, paragraphs 0024, 0056, 0294</td><td>1-48</td></tr>
<tr><td>Y</td><td colspan="2">CN 109937598 A (SAMSUNG ELECTRONICS CO., LTD.) 25 June 2019 (2019-06-25)<br>description, paragraph 0070</td><td>1-48</td></tr>
<tr><td>Y</td><td colspan="2">CN 110602731 A (ZTE CORPORATION) 20 December 2019 (2019-12-20)<br>description, paragraphs 0049-0054</td><td>5-12, 16-22,<br>27-34, 38-44</td></tr>
<tr><td>A</td><td colspan="2">WO 2018059168 A1 (HUAWEI TECHNOLOGIES CO., LTD.) 05 April 2018 (2018-04-05)<br>entire document</td><td>1-48</td></tr>
<tr><td>A</td><td colspan="2">NOKIA et al. "On the Frame structure and Wideband operation for NR-U"<br>*3GPP TSG RAN WG1 Meeting #94bis, R1-1810613*, 12 October 2018 (2018-10-12),<br>entire document</td><td>1-48</td></tr>
<tr><td colspan="2">☐ Further documents are listed in the continuation of Box C.</td><td colspan="2">☑ See patent family annex.</td></tr>
<tr><td colspan="2">\*      Special categories of cited documents:<br>"A"    document defining the general state of the art which is not considered to be of particular relevance<br>"E"    earlier application or patent but published on or after the international filing date<br>"L"    document which may throw doubts on priority claim(s) or which is cited to establish the publication date of another citation or other special reason (as specified)<br>"O"    document referring to an oral disclosure, use, exhibition or other means<br>"P"    document published prior to the international filing date but later than the priority date claimed</td><td colspan="2">"T"    later document published after the international filing date or priority date and not in conflict with the application but cited to understand the principle or theory underlying the invention<br>"X"    document of particular relevance; the claimed invention cannot be considered novel or cannot be considered to involve an inventive step when the document is taken alone<br>"Y"    document of particular relevance; the claimed invention cannot be considered to involve an inventive step when the document is combined with one or more other such documents, such combination being obvious to a person skilled in the art<br>"&"    document member of the same patent family</td></tr>
<tr><td colspan="2">Date of the actual completion of the international search<br><br>**29 September 2020**</td><td colspan="2">Date of mailing of the international search report<br><br>**21 October 2020**</td></tr>
<tr><td colspan="2">Name and mailing address of the ISA/CN<br><br>**China National Intellectual Property Administration (ISA/CN)**<br>**No. 6, Xitucheng Road, Jimenqiao, Haidian District, Beijing**<br>**100088**<br>**China**</td><td colspan="2">Authorized officer</td></tr>
<tr><td colspan="2">Facsimile No. **(86-10)62019451**</td><td colspan="2">Telephone No.</td></tr>
</table>

Form PCT/ISA/210 (second sheet) (January 2015)

**INTERNATIONAL SEARCH REPORT**
Information on patent family members

International application No.

**PCT/CN2020/073314**

| Patent document cited in search report | | | Publication date (day/month/year) | Patent family member(s) | | | Publication date (day/month/year) |
|---|---|---|---|---|---|---|---|
| CN | 107432028 | A | 01 December 2017 | WO | 2016121537 | A1 | 04 August 2016 |
| | | | | EP | 3253160 | A1 | 06 December 2017 |
| | | | | US | 2018041857 | A1 | 08 February 2018 |
| | | | | JP | WO2016121537 | A1 | 24 November 2017 |
| CN | 109937598 | A | 25 June 2019 | EP | 3520526 | A1 | 07 August 2019 |
| | | | | US | 2020137720 | A1 | 30 April 2020 |
| | | | | WO | 2018084623 | A1 | 11 May 2018 |
| | | | | US | 2020100216 | A1 | 26 March 2020 |
| | | | | US | 2018124744 | A1 | 03 May 2018 |
| | | | | KR | 20180049804 | A | 11 May 2018 |
| CN | 110602731 | A | 20 December 2019 | None | | | |
| WO | 2018059168 | A1 | 05 April 2018 | EP | 3547587 | A1 | 02 October 2019 |
| | | | | CN | 107872847 | A | 03 April 2018 |

Form PCT/ISA/210 (patent family annex) (January 2015)